# EUROPEAN PATENT APPLICATION

(11) **EP 3 153 905 A2**
(43) Date of publication of application: **12.04.2017**
(21) Application number: 16192667.0
(22) Date of filing: 06.10.2016
(51) Int. Cl.: G02B 19/00, G01S 17/00, G02B 17/06, G02B 17/08, G02B 27/14

(54) **IMAGE-FORMING OPTICAL COMPONENT AND OPTICAL SYSTEM OF SURVEYING INSTRUMENT**

(30) Priority: 07.10.2015 JP 2015199195
(71) Applicant: TOPCON CORPORATION, Tokyo-to Tokyo (JP)
(72) Inventor: YUASA, Taichi, Tokyo-to, Tokyo (JP)
(74) Representative: Copsey, Timothy Graham

(57) **Abstract**

The invention provides an image-forming optical component, which comprises a concaved reflection surface for reflecting an incident light and a convexed reflection surface arranged opposite to the concaved reflection surface, wherein the concaved reflection surface reflects the incident light so that the incident light is condensed on the convexed reflection surface, and the convexed reflection surface is adapted to focus the incident light.

## Description

### BACKGROUND OF THE INVENTION

The present invention relates to an image-forming optical component and an optical system of a surveying instrument. In particular, the present invention relates to an optical system of a light receiving unit.

The optical system to be used in a surveying instrument usually has a large aperture lens in order to ensure light receiving amount at long distance. For this reason, the optical system is large and has higher weight.

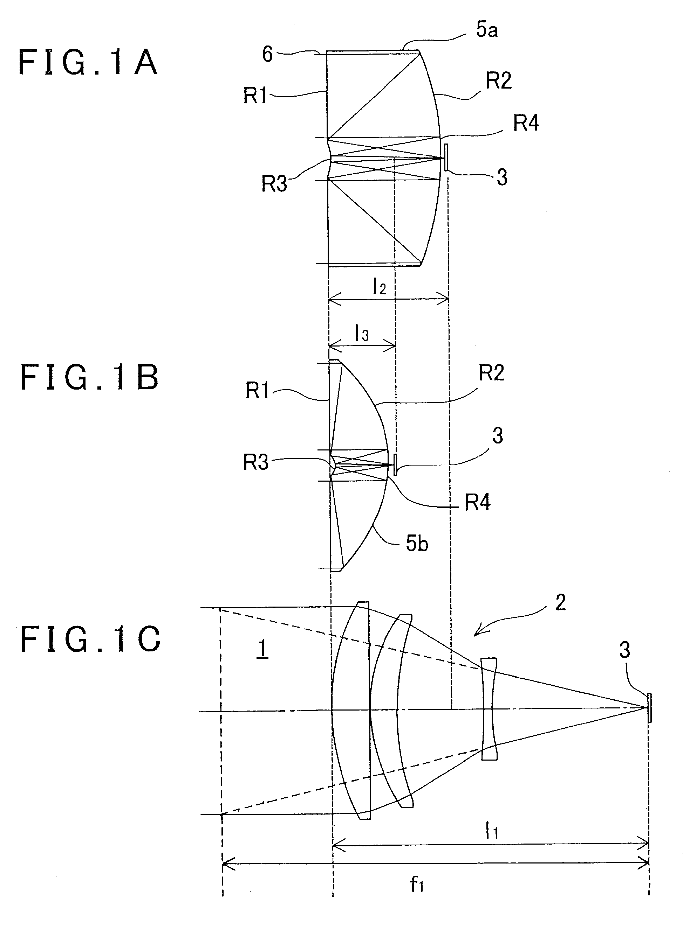

FIG.1C shows an optical system 1 of a light receiving unit which has been conventionally used.

The image-forming optical component has a lens group 2, which comprises a plurality of lenses, and an incident light is focused on a photodetecting surface 3 by a refractive action of the lens.

The lens group 2 has a focal length f1, and a total length of the optical system 1 is 11. This focal length is determined according to performance characteristics which is required for the optical system of the surveying instrument.

Therefore, the light receiving unit is designed in such a size adequate to accommodate the lens group 2, and further, a length in direction of an optical axis depends on the focal length f1.

Further, attempts have been made in recent years to design a surveying instrument of smaller size and lighter weight, while regarding the optical system, it is still difficult to miniaturize because of a size of the lens group 2 and a restriction of the focal length f1.

### SUMMARY OF THE INVENTION

It is an object of the present invention to make it possible to miniaturize an image-forming optical component in a light receiving optical system, and further, to miniaturize an optical system in a surveying instrument.

To attain the object as described above, an image-forming optical component according to the present invention comprises a concaved reflection surface for reflecting an incident light and a convexed reflection surface arranged opposite to the concaved reflection surface, wherein the concaved reflection surface reflects the incident light so that the incident light is condensed on the convexed reflection surface, and the convexed reflection surface is adapted to focus the incident light.

Further, in the image-forming optical component according to the present invention, the image-forming optical component is a lens, a surface opposite to an incident surface of the lens is a curved concave surface, a reflection coating is formed except a central part of the curved concave surface, a concave portion is formed at a central part of the incident surface, and a reflection coating is formed on the concave portion as a convexed reflection surface and wherein the incident light reflected by the convexed reflection surface passes through a central part of the curved concave surface and is focused outside the lens.

Further, in the image-forming optical component according to the present invention, the image-forming optical component comprises a plurality of lenses as cemented together.

Further, in the image-forming optical component according to the present invention, the image-forming optical component comprises a main lens and a small lens wherein a surface opposite to an incident surface of the main lens is a curved concave surface, a reflection coating is formed except a central part of the curved concave surface, the small lens is cemented to a central part of an incident surface of the main lens, a concave portion is formed on a non-cemented surface of the small lens, a reflection coating is formed on a curved concave surface formed by the concave portion, and a convexed reflection surface is formed to protrude toward the curved concave surface wherein the incident light reflected by the convexed reflection surface passes through the central part of the curved concave surface and is focused outside the main lens.

Further, the image-forming optical component according to the present invention comprises a lens and a reflection mirror, wherein a surface opposite to an incident surface of the lens is a curved concave surface, a reflection coating is formed on the curved concave surface, a concave portion is formed at a central part of the incident surface, the reflection mirror is provided so as to oppose to the concave portion, wherein an incident light, which is reflected on the curved concave surface so as to condense on the concave portion, passes through the concave portion, is reflected by the reflection mirror and is focused outside the lens.

Further, the image-forming optical component according to the present invention comprises a concaved reflection surface and a catadioptric lens separated from the concaved reflection surface, wherein a surface opposite to the concaved reflection surface of the catadioptric lens is a sub-reflection surface, the concaved reflection surface reflects an incident light so as to enter to the catadioptric lens, and a surface opposite to the concaved reflection surface of the catadioptric lens is so designed that the incident light reflected by the sub-reflection surface focuses between the concaved reflection surface and the catadioptric lens.

Further, an optical system of a surveying instrument according to the present invention comprises a light projecting optical system for projecting a distance measuring light and a light receiving optical system for distance measurement for receiving a reflected distance measuring light as reflected from an object to be measured as an incident light, wherein the light receiving optical system for distance measurement has an image-forming optical component for focusing the incident light on a photodetecting surface, and the image-forming optical component is one of optical components as described above.

Further, the optical system of the surveying instrument according to the present invention further comprises an illumination light source for tracking, the illumination light source for tracking is provided opposite to a concave portion of the incident surface, an illumination light emitted from the illumination light source for tracking is projected after reflected by the concave portion.

Furthermore, in the optical system of the surveying instrument according to the present invention, an optical axis to pass through a central part of the curved concave surface is branched by a dichroic mirror, an illumination light source for tracking is provided on one of branched optical axes, a photodetecting surface is arranged on the other of the optical axes and the dichroic mirror is adapted to separate an illumination light and a distance measuring light.

According to the present invention, an image-forming optical component comprises a concaved reflection surface for reflecting an incident light and a convexed reflection surface arranged opposite to the concaved reflection surface, wherein the concaved reflection surface reflects the incident light so that the incident light is condensed on the convexed reflection surface, and the convexed reflection surface is adapted to focus the incident light. As a result, a length of the optical axis is shortened, and a miniaturization of an optical system is realized.

Further, according to the present invention, in the image-forming optical component, the image-forming optical component is a lens, a surface opposite to an incident surface of the lens is a curved concave surface, a reflection coating is formed except a central part of the curved concave surface, a concave portion is formed at a central part of the incident surface, and a reflection coating is formed on the concave portion as a convexed reflection surface and wherein the incident light reflected by the convexed reflection surface passes through a central part of the curved concave surface and is focused outside the lens. As a result, the length of the optical axis is shortened, and the miniaturization of the optical system is realized.

Further, according to the present invention, the image-forming optical component comprises a concaved reflection surface and a catadioptric lens separated from the concaved reflection surface, wherein a surface opposite to the concaved reflection surface of the catadioptric lens is a sub-reflection surface, the concaved reflection surface reflects an incident light so as to enter to the catadioptric lens, and a surface opposite to the concaved reflection surface of the catadioptric lens is so designed that the incident light reflected by the sub-reflection surface focuses between the concaved reflection surface and the catadioptric lens. As a result, the length of the optical axis is shortened, and the miniaturization of the optical system is realized.

Furthermore, according to the present invention, an optical system of a surveying instrument comprises a light projecting optical system for projecting a distance measuring light and a light receiving optical system for distance measurement for receiving a reflected distance measuring light as reflected from an object to be measured as an incident light, wherein the light receiving optical system for distance measurement has an image-forming optical component for focusing the incident light on a photodetecting surface, and the image-forming optical component is one of optical components as described above. As a result, the light receiving optical system for distance measurement is miniaturized, and further the optical system of the surveying instrument is miniaturized.

### BRIEF DESCRIPTION OF THE DRAWINGS

FIG.1A and FIG.1B are drawings to show an image-forming optical component according to a present embodiment, and FIG.1C is a drawing to show a conventional image-forming optical component.
FIG.2A to FIG.2C are drawings to show an image-forming optical component according to a present embodiment respectively.
FIG.3 is a drawing to show another image-forming optical component according to a present embodiment.
FIG.4 is a drawing to show another image-forming optical component according to a present embodiment.
FIG.5 is a drawing to show another image-forming optical component according to the present embodiment.
FIG.6 is a drawing to show another image-forming optical component according to a present embodiment.
FIG.7 is a drawing to show another image-forming optical component according to a present embodiment.
FIG.8 is a drawing to show another image-forming optical component according to a present embodiment.
FIG.9 is an optical arrangement to show a first embodiment of the present invention.
FIG.10 is an optical arrangement to show a second embodiment.
FIG.11 is an optical arrangement to show a third embodiment.
FIG.12A is an optical arrangement to show a fourth embodiment, and FIG.12B is an arrow diagram along an arrow A of FIG.12A.
FIG.13A is an optical arrangement to show a fifth embodiment, and FIG.13B is an arrow diagram along an arrow A of FIG.13A.
FIG.14A is an optical arrangement to show a sixth embodiment, and FIG.14B is a partial view to show an illumination light source.
FIG.15A is an optical arrangement to show a seventh embodiment, and FIG.15B is a partial view to show an illumination light source and a light receiving optical system for receiving tracking and for image pickup.
FIG.16 is an optical arrangement to show an eighth embodiment.
FIG.17 is a transmission characteristic diagram of an optical filter provided on a light receiving optical system for receiving tracking and for image pickup.

### DETAILED DESCRIPTION OF THE PREFERRED EMBODIMENTS

A description will be given below on embodiments of the present invention by referring to the attached drawings.

FIG.1A shows an example of an image-forming optical component to be used in a light receiving unit of the present embodiment.

The image-forming optical component comprises a single lens 5a, and the lens 5a has refractive action and reflex action.

The lens 5a has an object-side surface R1 which is an incident surface, an image-forming side surface R2 which is a reflection surface, a surface R3 which is formed concentrically with the surface R1 at a central part of the surface R1, and a surface R4 which is formed concentrically with the surface R2 at a central part of the surface R2.

The surface R1 is a flat surface, and the surface R2 is designed as a concave surface toward the surface R1. The surface R3 has a predetermined diameter, and is convexed toward the surface R2. The surface R4 may be an extension of the surface R2 or may be a flat surface. Further, or, the surface R4 may be an independent curved surface.

The surface R1 allows an incident light 6 to totally pass through, and an antireflection coating (hereinafter referred as "antireflection coating (AR coating)") is formed. Further, a reflection coating for totally reflecting the incident light 6 is formed on each of the surface R2 and the surface R3. The surface R4 is designed in a circular shape, and a diameter of the surface R4 is smaller than or equal to a diameter of the surface R3. On the surface R4, an antireflection coating (AR coating) is formed to allow the incident light 6 to totally pass through.

The surface R2 reflects the incident light 6, which enters through the surface R1, so that the incident light 6 is gathered within a range of the surface R3. The surface R2 is designed to have an adequate curved surface such as a spherical surface, or an aspherical surface, or the like so that the incident light 6 is gathered within the range of the surface R3.

The surface R3 reflects the incident light 6 and focuses the incident light 6 as reflected at a position where the incident light 6 passes through the surface R4, i.e. outside the lens 5a. Therefore, the surface R3 is formed by the adequate curved surface such as a spherical surface or an aspherical surface in order to focus the incident light 6 at a position passing through the surface R4. It is to be noted that in a case where a photodetecting surface coincides with the surface R4 such as a case where the photodetection element is provided in contact with the surface R2 or the like, a focusing position of the lens 5a may be on the surface R2.

It is to be noted that the photodetecting surface 3 may be a photodetecting surface of the photodetection element or may be a light receiving end surface of an optical fiber.

When a total length 12 of the optical system of the lens 5a in the present embodiment is compared with a total length of the optical system 11 of a conventional lens group 2 as shown in FIG.1C, the length 12 is about 1/3 of the length 11, and an extensive miniaturization is achieved.

Next, a lens 5b as shown in FIG.1B shows a variation of the lens 5a as shown in FIG.1A.

In the lens 5b, similarly to the lens 5a, a surface R3 is formed at a center of a surface R1, and a surface R4 is formed at a center of a surface R2.

In the lens 5b, curvatures of the surface R2 and the surface R3 are increased respectively, and the total length 13 of the optical system is further shortened. Therefore, in the lens 5b, the length 13 is less than 1/5 of the length 11, and a further miniaturization is achieved.

It is to be noted that by increasing a curvature, a decentering sensitivity between the surfaces is increased, and the difficulty in manufacture is increased. Thus, the curvature is selected by taking characteristics as required for the optical system into consideration.

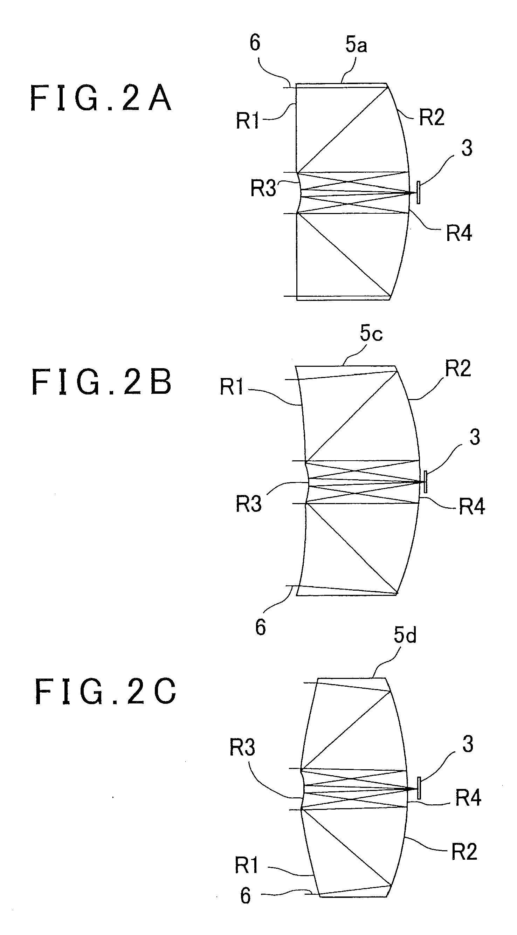

A description will be given on a further variation example of the lens 5a by referring to FIG.2A to FIG.2C.

It is to be noted that the lens 5a as shown in FIG.2A is the same as the lens 5a as shown in FIG.1A.

Further, the lenses as shown in FIG.2A to FIG.2C show a case where a single lens is used.

In a lens 5c as shown in FIG.2B by forming a surface R1 as a curved concave surface, it is so arranged that a lens effect is applied on an incident light 6 entering from the surface R1. The incident light 6 entering from the surface R1 is diffused and enters a surface R2.

Further, in a lens 5d as shown in FIG.2C by forming a surface R1 as a curved convex surface, and it is so arranged that a lens effect reverse to the lens 5c is applied on the incident light 6. The incident light 6 entering from the surface R1 is gatherd and enters the surface R2.

It is adequately selected as to whether the surface R1 is designed as a flat surface, a curved concave surface or a curved convex surface, according to a performance characteristic as required for the optical system.

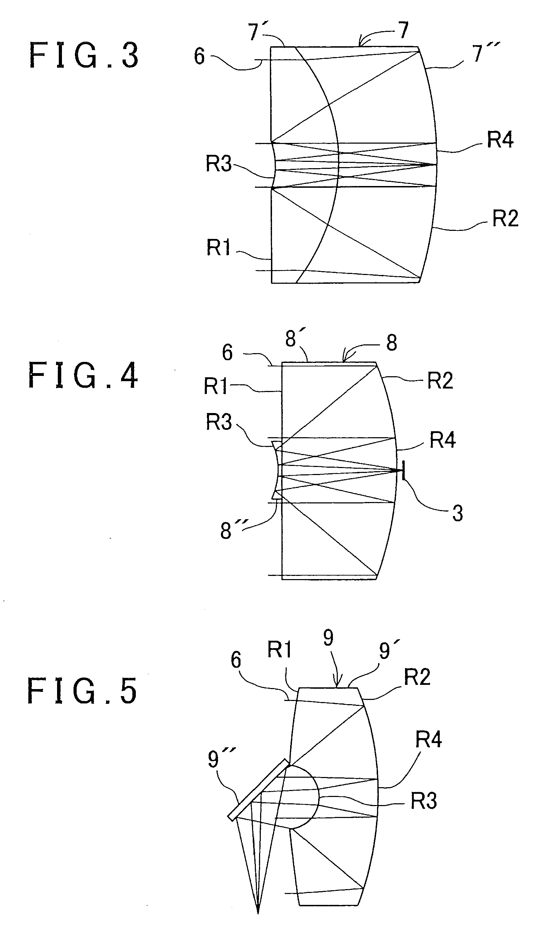

FIG.3 shows a lens 7 as an image-forming optical component. The lens 7 divides a lens 5a as shown in FIG.2A to two lenses, i.e. a lens 7' and a lens 7", and further, the lens 7 is made up by cementing the two lenses, i.e. the lens 7' and the lens 7". Although a case where the lens 5a is divided is shown in FIG.3, a division can be similarly carried out with respect to the lens 5c and the lens 5d. It is to be noted that, the division may not be limited to a two-piece division, or may be a three-piece division or more.

By making up the image-forming optical component with a plurality of lenses, the freedom of designing is increased, and it is possible to correct a chromatic aberration.

As an advantage of a correction of the chromatic aberration, there is an advantage that a wavelength to be used for an adjustment at the time of a manufacture can be set to a visible light so that the adjustment can be made easier.

A lens 8 as an image-forming optical component as shown in FIG.4 is a one that the surface R3 of the lens 5a as shown in FIG.1A is formed by another small lens 8".

The small lens 8" is cemented at a central part of a surface R1 of a lens 8' which has a surface R1, a surface R2 and a surface R4. A curved concave surface (a convex surface toward the surface R2) is formed on the small lens 8", and a total reflection coating is formed on the curved concave surface.

In the lens 8, an incident light 6 entering from the surface R1 is reflected by the surface R2, passes through the surface R1, is reflected by the surface R3, and is focused on the photodetecting surface 3. In the lens 8, the incident light 6 enters the small lens 8", and the lens effect is applied during a process of entering the lens 8' from the small lens 8". By making up the lens 8 with two lenses, i.e. the lens 8' and the lens 8", the freedom of designing is increased, and it is possible to correct the chromatic aberration.

An image-forming optical component 9 as shown in FIG.5 is comprised of a catadioptric lens 9' and a reflection mirror 9".

The catadioptric lens 9' has an incident surface (a surface R1) designed as a curved convex surface, and a curved concave surface (surface R3) is formed at a central part of the surface R1. The reflection mirror 9" is disposed to oppose to the surface R3. The surface R1 and the surface R3 are light transmitting surfaces, and the surface R2 is a reflective surface.

The incident light 6, which enters the image-forming optical component 9, receives lens operation on the surface R1, is refracted to an optical axis side and is reflected on the surface R2 so as to be directed toward the optical axis side. Further, the incident light 6 receives lens operation during passing through the surface R3, and is refracted in a direction to be separated from the optical axis.

Then, the incident light 6 passes through the surface R1 and is reflected on the surface R2 and passes through the surface R3 and is reflected by the reflection mirror 9" and is focused outside an incident optical path of the incident light 6.

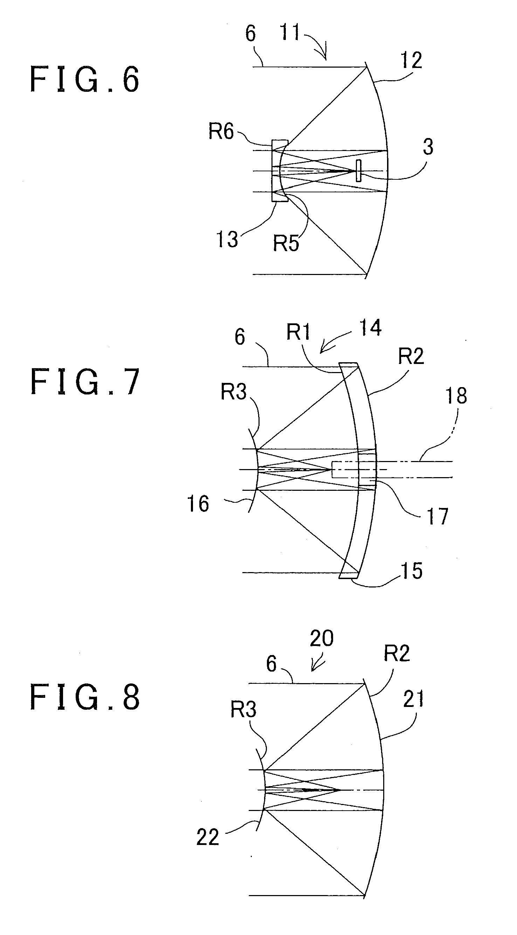

The image-forming optical component 11 as shown in FIG.6 has a function equivalent to the lens as described above and is comprised of a concaved reflection mirror 12 and a catadioptric lens 13.

On the optical axis of the concaved reflection mirror 12, the catadioptric lens 13 is arranged to oppose to a reflection surface of the concaved reflection mirror 12.

A surface R5 to face the concaved reflection mirror 12 of the catadioptric lens 13 is designed as an aspherical lens surface, and an object side of the catadioptric lens 13 is a surface R6. The surface R6 is opposed to the concaved reflection mirror 12 and acts as a sub-reflection surface which totally reflects an incident light 6.

After being reflected by the concaved reflection mirror 12, the incident light 6 enters the catadioptric lens 13, receives lens operation during passing through the surface R5, is refracted in a direction to be separated from the optical axis. The incident light 6 is further reflected by the surface R6. By the lens action of the surface R5 and by the reflex action of the surface R6, the incident light 6 is focused on a photodetecting surface 3.

The surface R6 may be a flat surface or may be a spherical surface or an aspherical surface.

It is to be noted that because a space is formed between the concaved reflection mirror 12 and the catadioptric lens 13, a focusing position may be between the concaved reflection mirror 12 and the catadioptric lens 13.

By setting the focusing position between the concaved reflection mirror 12 and the catadioptric lens 13, it is possible further to shorten the length of the image-forming optical component 11 in the optical axis direction.

In the image-forming optical component 11, it is possible to make the reflection surface of the concaved reflection mirror 12 a spherical surface. An aspherical lens with a large aperture is not needed, and a manufacturing cost can be reduced.

The image-forming optical component 14 as shown in FIG.7 comprises a catadioptric lens 15 and a reflection mirror 16.

The catadioptric lens 15 is designed as a meniscus lens. An object side of the catadioptric lens 15 is a surface R1. The surface R1 is designed as a light transmitting surface of an incident light 6, and an antireflection coating (AR coating) is formed on the surface R1. Further, an opposite surface of the catadioptric lens 15 is a surface R2 where a reflection coating is formed.

The reflection mirror 16 is provided which is positioned on an optical axis of the catadioptric lens 15 and opposes to the surface R1.

The incident light 6 passes through the surface R1, is reflected by the surface R2 and is gathered on a surface R3. The incident light 6 as reflected by the surface R3 is focused on the optical axis.

In the image-forming optical component 14, a focusing position is positioned between the surface R3 and the surface R1.

At the central part of the catadioptric lens 15, a hole 17 is formed. An optical fiber 18 is arranged to pass through the hole 17 so that a light receiving end surface of the optical fiber 18 coincides with the focusing position.

An image-forming optical component 20 as shown in FIG.8 comprises a concaved reflection mirror 21 and a convexed reflection mirror 22.

The concaved reflection mirror 21 has a surface R2 which condenses an incident light 6 toward the convexed reflection mirror 22. The convexed reflection mirror 22 reflects the incident light 6 so that the incident light 6 is focused on the optical axis and between the concaved reflection mirror 21 and the convexed reflection mirror 22.

It is to be noted that a photodetection element may be arranged at the focusing position, or similarly to the image-forming optical component 14, the hole 17 may be provided on the concaved reflection mirror 21, and an optical fiber 18 passing through the hole 17 may be arranged.

As described above, the image-forming optical component according to the present embodiment has at least a large diameter reflection surface R2 and a small diameter reflection surface R3 opposite to the reflection surface R2. The large diameter reflection surface R2 allows the incident light 6 to enter the small diameter reflection surface R3, and further, the small diameter reflection surface R3 reflects the incident light 6 and focuses on the optical axis.

Thus, it is needless to say that an optical arrangement having such an optical operation can be conceived in various ways.

Next, a description will be given on an optical system of a surveying instrument, which has an image-forming optical component as described above.

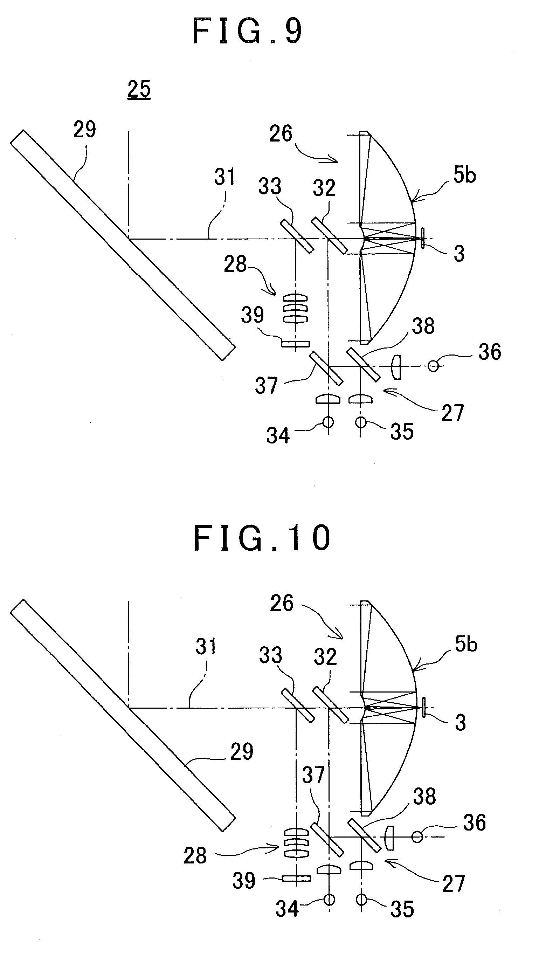

FIG.9 shows an optical system 25 of a laser scanner as a first embodiment having the image-forming optical component according to the present invention. In the optical system 25, a lens 5b as shown in FIG.1B is used from the image-forming optical components as described above.

In FIG.9, reference numeral 26 denotes a light receiving optical system for distance measurement, reference numeral 27 denotes a light projecting optical system, numeral 28 denotes a light receiving optical system for image pickup, and numeral 29 denotes a rotary mirror for projecting a distance measuring light in rotary irradiation.

An optical axis 31 of the lens 5b directs toward a center of the rotary mirror 29, and a mirror 32 and a first dichroic mirror 33 are arranged along the optical axis 31 from the lens 5b. The mirror 32 reflects a distance measuring light, a laser pointer light and an illumination light. The first dichroic mirror 33 is adapted to allow the distance measuring light to pass through and reflect a visible light.

Further, the optical axis 31 is deflected by the rotary mirror 29 and is directed toward a measuring direction.

It is so arranged that the light projecting optical system 27 projects a distance measuring light from a distance measuring light source 34, a laser pointer light from a laser pointer light source 35, and an illumination light from an illumination light source 36 via the optical axis 31 respectively. Here, each of the distance measuring light, the laser pointer light and the illumination light has wavelength different from each other so that the each light can be separated from each other by the dichroic mirror.

Further, the light projecting optical system 27 has a second dichroic mirror 37 and a third dichroic mirror 38. The second dichroic mirror 37 is adapted to allow the distance measuring light to pass through and reflects the laser pointer light and the illumination light. Further, the third dichroic mirror 38 has such characteristics that the third dichroic mirror 38 allows the illumination light to pass through but reflects the laser pointer light. It is to be noted that the third dichroic mirror 38 may be replaced by a half mirror.

The distance measuring light as emitted from the distance measuring light source 34 passes through the second dichroic mirror 37 and is reflected by the mirror 32, passes through the first dichroic mirror 33, is deflected by the rotary mirror 29 and is projected in the measuring direction.

The laser pointer light as emitted from the laser pointer light source 35 is reflected by the third dichroic mirror 38 and the second dichroic mirror 37, is reflected on the optical axis 31 by the mirror 32, passes through the first dichroic mirror 33 and is further deflected by the rotary mirror 29 and is projected in the measuring direction. The laser pointer light is projected on the same as the optical axis of the distance measuring light (i.e. the optical axis 31), and indicates a measuring point.

Further, the illumination light as emitted from the illumination light source 36 passes through the third dichroic mirror 38, is reflected on the optical axis 31 by the second dichroic mirror 37 and the mirror 32, passes through the first dichroic mirror 33 and is further deflected by the rotary mirror 29 and is projected in the measuring direction.

A reflected distance measuring light as reflected from the object to be measured enters the rotary mirror 29 via the optical axis 31, is reflected by the rotary mirror 29, passes through the first dichroic mirror 33 and the mirror 32 and is focused on a photodetecting surface 3 by the lens 5b.

The distance measuring light as focused is received by a photodetection element (not shown), and a distance measurement is performed based on a photodetection signal as outputted from the photodetection element.

The illumination light as reflected from the object to be measured is reflected by the rotary mirror 29 and the first dichroic mirror 33, and is received by an image pickup device 39 via the light receiving optical system 28 for image pickup. As the image pickup device 39, CMOS sensor or CCD, or the like is used, and is so designed that a photodetecting position in the photodetecting surface can be specified.

In a case where a measurement range as required is measured by a laser scanner, there is a case where a reference point is needed within the measurement range. In such cases, an object to be measured with a retroreflectivity such as a corner cube is set at the reference point. The object to be measured is irradiated by the illumination light, a reflection light from the object to be measured is received, a position of the object to be measured is determined, and the reference position is set.

As described above, by using the lens 5b in the light receiving optical system 26 for distance measurement, the length of the optical axis of the light receiving optical system 26 for distance measurement is extensively shortened, and a miniaturization of a surveying instrument can be achieved.

FIG.10 shows a second embodiment which is a variation example of the embodiment as shown in FIG.9. In the second embodiment, the lens 5b is used as an image-forming optical component. Further, in FIG.10, what are equivalent to components as shown in FIG.9 are referred by the same symbol, and a detailed description thereof is not given here.

In the embodiment as shown in FIG.9, a light receiving optical system 28 for image pickup is arranged in a light receiving optical path of the distance measuring light. Therefore, a part of the light receiving amount is blocked by the light receiving optical system 28 for image pickup. In the second embodiment as shown in FIG.10, the light receiving optical system 28 for image pickup is arranged outside the light receiving optical path.

Therefore, in the second embodiment, the light receiving amount can be effectively utilized.

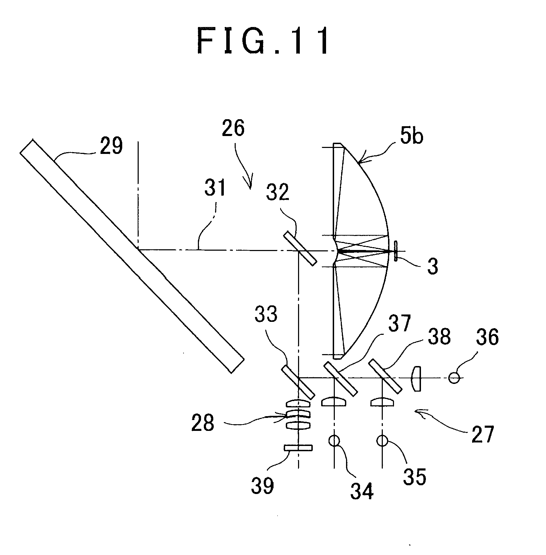

Referring to FIG.11, a description will be given below on a third embodiment.

In the third embodiment, a first dichroic mirror 33, which guides a distance measuring light from a distance measuring light source 34, a laser pointer light from a laser pointer light source 35 and an illumination light from an illumination light source 36 to an optical axis 31, is provided on an optical axis of a light receiving optical system 28 for image pickup.

The distance measuring light emitted from the distance measuring light source 34 is sequentially reflected by a second dichroic mirror 37, the first dichroic mirror 33, and a mirror 32, and is projected on the optical axis 31.

Further, the laser pointer light as emitted from the laser pointer light source 35 is reflected by a third dichroic mirror 38, passes through the second dichroic mirror 37 and is reflected by the first dichroic mirror 33 and the mirror 32, and is projected on the optical axis 31.

Further, the illumination light as emitted from the illumination light source 36 passes through the third dichroic mirror 38 and the second dichroic mirror 37, is reflected by the first dichroic mirror 33 and the mirror 32, and is projected on the optical axis 31.

In this case, the third dichroic mirror 38 allows the illumination light to pass through and reflects the laser pointer light. The second dichroic mirror 37 reflects the distance measuring light and allows the illumination light and the laser pointer light to pass through. The first dichroic mirror 33 reflects the distance measuring light and the laser pointer light, reflects a part of the illumination light and allows a part of the illumination light to pass through.

Since the first dichroic mirror 33 is provided at a position apart from the optical axis 31, a length of the optical axis 31 is shortened accordingly. Therefore, the light receiving optical system 26 for distance measurement can be further miniaturized.

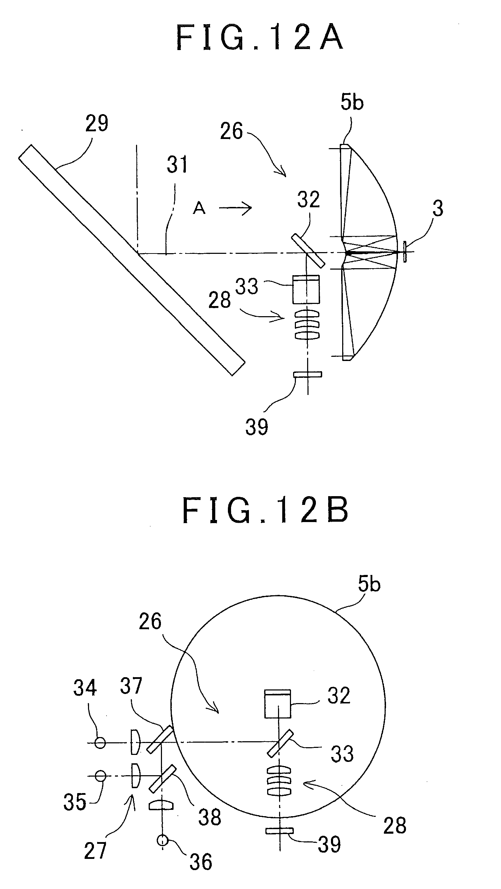

FIG.12A and FIG.12B show a fourth embodiment. In FIG. 12A and FIG.12B, what are equivalent to components as shown in FIG.11 are referred by the same symbol, and detailed description thereof will not be given here.

In the third embodiment, a branching direction of the optical axis by the second dichroic mirror 37 is a parallel direction with respect to a paper surface (parallel to the optical axis 31). On the other hand, in the fourth embodiment, the optical axis is branched off in a direction perpendicular to the paper surface by the second dichroic mirror 37.

Since in the fourth embodiment, a light projecting optical system 27 is provided on a lateral side of a light receiving optical system 28 for image pickup, a length in the direction of the optical axis 31 is further shortened, and further miniaturization of the optical system can be achieved.

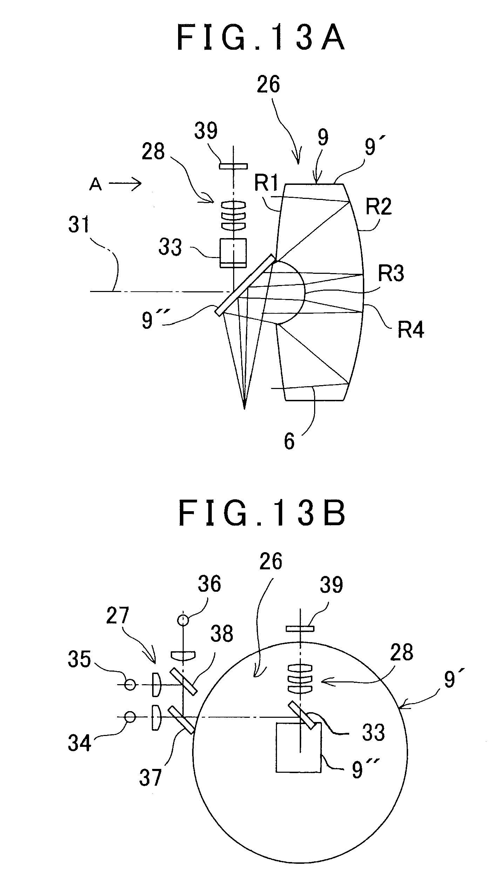

FIG.13A and FIG.13B show a fifth embodiment. In the fifth embodiment, an image-forming optical component 9 as shown in FIG.5 is used. It is to be noted that in FIG.13A and FIG.13B, what are equivalent to components as shown in FIG.12A and FIG.12B are referred by the same symbol, and detailed description thereof is not given here. In FIG.13A and FIG.13B, a rotary mirror 29 is not shown.

In a reflection mirror 9", both surfaces opposite to a catadioptric lens 9' and a surface of an object-side are reflection surfaces.

An optical axis of a light projecting optical system 27, and an optical axis of the light receiving optical system 28 for image pickup are deflected so as to coincide with the optical axis 31 on a reflection surface of the object-side of the reflection mirror 9". Further, an incident light 6 projected from the catadioptric lens 9' is reflected on the reflection surface on the side of the catadioptric lens 9' of the reflection mirror 9", and is focused.

Therefore, on one side across the reflection mirror 9" the light projecting optical system 27 and the light receiving optical system 28 for image pickup are arranged and on the other side a distance measuring light detecting unit (not shown) such as a photodetecting surface 3, or the like are arranged.

In the fifth embodiment, nothing is arranged on non-object side of the catadioptric lens 9', and further, spaces on both sides of the reflection mirror 9" are effectively utilized. As a result, the photodetection system can be miniaturized.

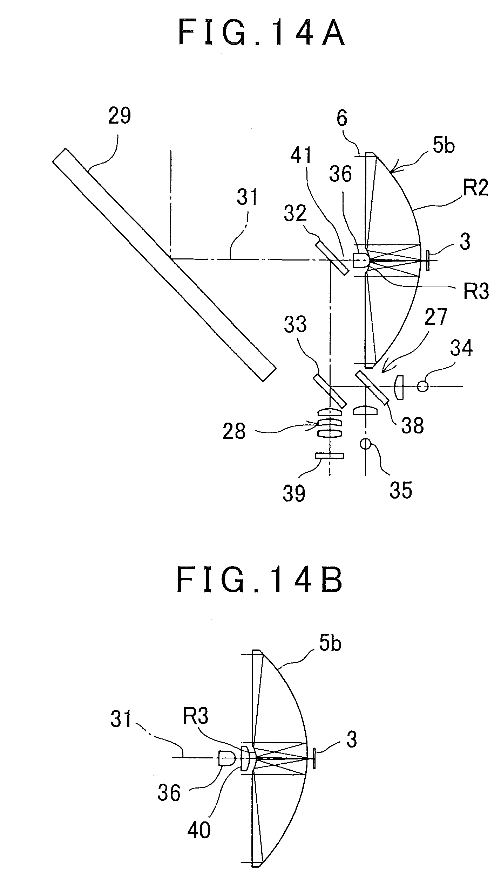

FIG.14A shows a sixth embodiment. In the sixth embodiment, the lens 5b as shown in FIG.1B is used as the image-forming optical component.

The sixth embodiment is a variation of the third embodiment as shown in FIG.11. In FIG.14A and FIG.14B, what are equivalent to components as shown in FIG.11 are referred by the same symbol, and detailed description is not given here.

In a case where the lens 5b is used, a dead space 41 occurs between a surface R3 and a mirror 32. In the sixth embodiment, the dead space 41 is effectively utilized, and a miniaturization of the optical system is achieved.

An illumination light source 36 is provided on an optical axis 31 (an optical axis of the lens 5b) passing through the mirror 32 and opposite to the R3. An illumination light as emitted from the illumination light source 36 passes through the surface R3 and is projected after being reflected by the surface R2. In this case, the surface R3 and the surface R2 exert an action to make the illumination light parallel light. It is to be noted that as shown in FIG.14B, a condenser lens 40 may be provided between the illumination light source 36 and the surface R3.

It is to be noted that the illumination light source 36 may be provided in such manner that the illumination light is directly projected toward the mirror 32.

By arranging in the manner as given above, the second dichroic mirror 37 or the like can be omitted in the light projecting optical system 27 (see FIG.11).

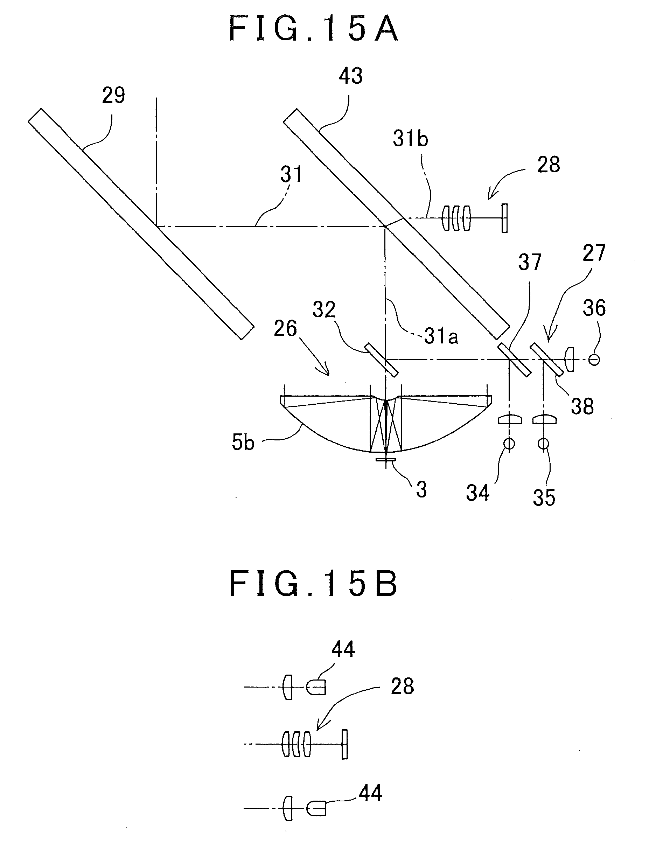

FIG.15A shows a seventh embodiment. In the seventh embodiment, the lens 5b as shown in FIG.1B is used as the image-forming optical component.

It is to be noted that in FIG.15A and FIG.15B, what are equivalent to components as shown in FIG.9 are referred by the same symbol, and detailed description thereof is not given here.

A dichroic mirror 43 is provided on the optical axis 31, and the optical axis 31 is branched to a reflection optical axis 31a and a transmission optical axis 31b.

On the reflection optical axis 31a, a mirror 32 and the lens 5b are provided, and a light projecting optical system 27 is provided on the optical axis as reflected by the mirror 32. Further, a light receiving optical system 28 for image pickup is provided on the transmission optical axis 31b.

The dichroic mirror 43 reflects the distance measuring light, reflects a part of the illumination light and a laser pointer light, and allows a part of the visible light and the illumination light to pass through.

The light receiving optical system 28 for image pickup receives an illumination light passing through the dichroic mirror 43 and acquires an image. Or, the light receiving optical system 28 for image pickup carries out a tracking based on a result of photodetecting the reflection light from a corner cube as an object to be measured.

FIG.15B shows a relation between an illumination light projecting unit 44 and the light receiving optical system 28 for image pickup. Two sets of the illumination light projecting units 44 are provided symmetrically across the light receiving optical system 28 for image pickup placed therebetween.

By providing two illumination light sources at symmetrical positions, in a case where a reflection light from a corner cube or the like is received, a center of two light receiving points is a position of the optical axis 31 directed to the corner cube, and tracking can be carried out accurately. Therefore, in a case where the illumination light for tracking cannot be projected on a distance measuring optical axis, above arrangement is effective.

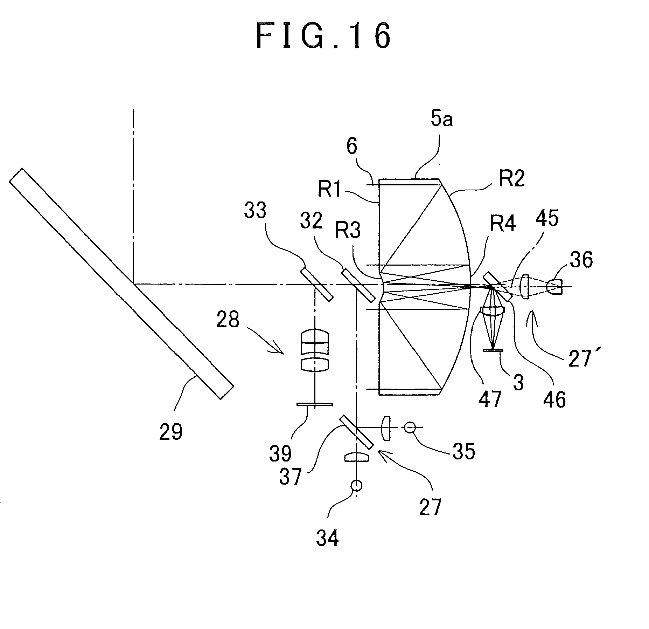

FIG.16 shows an eighth embodiment. In the eighth embodiment, the lens 5a as shown in FIG.1A is used as an image-forming optical component. It is to be noted that in FIG.16, what are equivalent to components as shown in FIG.9 are referred by the same symbol, and detailed description thereof is not given here. Further, the image-forming optical component may be anyone of the lenses 5b to 5d, the lens 7 and the lens 8.

In the eighth embodiment, an illumination light projecting unit 27' is provided on an optical axis 45 after passing through the surface R4 of the lens 5a. On the optical axis 45, a dichroic mirror 46 is provided.

The dichroic mirror 46 has such optical characteristics, which allow a visible light to pass through and reflects an invisible light. An illumination light emitted from an illumination light source 36 passes through the dichroic mirror 46 and is turned to a parallel luminous flux and is projected.

Further, the dichroic mirror 46 branches the optical axis 45 and deflects the optical axis as branched toward a photodetecting surface 3. A relay lens 47 is provided on the optical axis as branched. An incident light 6 as entered to the lens 5a is focused at a position where the incident light 6 passes through the surface R4, further, after reflected by the dichroic mirror 46, the incident light 6 is focused on the photodetecting surface 3 by the relay lens 47.

It is to be noted that the photodetecting surface 3 may be arranged on the optical axis passing through and the illumination light projecting unit 27' may be provided on the optical axis as branched.

In a light receiving optical system 28 for image pickup, a following optical filter may be provided.

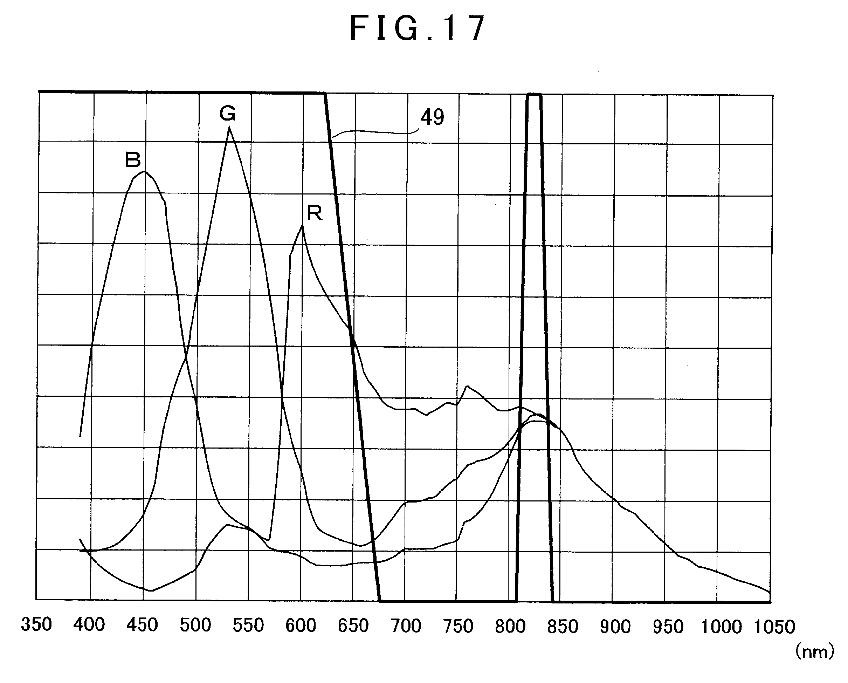

RGB sensitivity of a photodetection sensor as provided on a camera used in general is as shown in FIG.17.

Although wavelength of the visible light is in the range of 400 nm to 700 nm, the photodetection sensor also has a sensitivity in an infrared range. In particular, in wavelength of 810 nm to 840 nm, the sensitivity is same with RGB (red, green and blue) although the sensitivity is low.

By utilizing such characteristics, in a case where the infrared light of wavelength of, e.g., 810 nm to 840 nm is used as an illumination light for tracking, a filter with a transmission characteristic as shown in a curve 49 in FIG.17 is prepared, i.e. a filter is prepared, in which the wavelength of the visible range passes through and also the wavelength of the range between 810 nm to 840 nm passes through, and the filter is provided at a position as required in the light receiving optical system 28 for image pickup.

By providing this filter, it is possible to acquire natural color image by an image pickup device 39, and the reflection light of tracking (the infrared light) can also be received. Therefore, the tracking can be carried out based on the signals from the image pickup device 39.

The dichroic mirror may be replaced by a beam splitter or may be replaced by an optical element with a characteristic which is a dichroic mirror with respect to a part of the wavelength range and a beam splitter with respect to the other part of the wavelength range.

Further, the surface R1 to the surface R4 as described above may be designed in aspherical shapes so that, in order to ensure light receiving amount, a shape of a part of the lens adapts to focus at near distance.

## Claims

1. An image-forming optical component, comprising a concaved reflection surface (R2) for reflecting an incident light (6) and a convexed reflection surface (R3) arranged opposite to said concaved reflection surface, wherein said concaved reflection surface reflects said incident light so that said incident light is condensed on said convexed reflection surface, and said convexed reflection surface is adapted to focus said incident light.

2. The image-forming optical component according to claim 1, wherein said image-forming optical component is a lens (5a), a surface opposite to an incident surface (R1) of said lens is a curved concave surface (R2), a reflection coating is formed except a central part of said curved concave surface, a concave portion is formed at a central part of said incident surface, and a reflection coating is formed on said concave portion as a convexed reflection surface (R3) and wherein said incident light reflected by said convexed reflection surface passes through a central part of said curved concave surface and is focused outside said lens.

3. The image-forming optical component according to claim 2, wherein said image-forming optical component comprises a plurality of lenses (7', 7") as cemented together.

4. The image-forming optical component according to claim 1, wherein said image-forming optical component comprises a main lens (8') and a small lens (8") wherein a surface opposite to an incident surface (R1) of said main lens is a curved concave surface (R2), a reflection coating is formed except a central part of said curved concave surface, said small lens is cemented to a central part of an incident surface of said main lens, a concave portion is formed on a non-cemented surface of said small lens, a reflection coating is formed on a curved concave surface formed by said concave portion, and a convexed reflection surface (R3) is formed to protrude toward said curved concave surface wherein said incident light (6) reflected by said convexed reflection surface passes through the central part of said curved concave surface and is focused outside said main lens.

5. The image-forming optical component, comprising a lens (9') and a reflection mirror (9"), wherein a surface opposite to an incident surface (R1) of said lens is a curved concave surface (R2), a reflection coating is formed on said curved concave surface, a concave portion (R3) is formed at a central part of said incident surface, said reflection mirror is provided so as to oppose to said concave portion, wherein an incident light (6), which is reflected on said curved concave surface so as to condense on said concave portion, passes through said concave portion, is reflected by said reflection mirror and is focused outside said lens.

6. The image-forming optical component, comprising a concaved reflection surface (12) and a catadioptric lens (13) separated from said concaved reflection surface, wherein a surface opposite to said concaved reflection surface of said catadioptric lens is a sub-reflection surface (R6), said concaved reflection surface reflects an incident light (6) so as to enter to said catadioptric lens, and a surface opposite to said concaved reflection surface of said catadioptric lens is so designed that said incident light reflected by said sub-reflection surface focuses between said concaved reflection surface and said catadioptric lens.

7. An optical system of a surveying instrument, comprising a light projecting optical system (27) for projecting a distance measuring light and a light receiving optical system (26) for distance measurement for receiving a reflected distance measuring light as reflected from an object to be measured as an incident light (6), wherein said light receiving optical system for distance measurement has an image-forming optical component for focusing said incident light on a photodetecting surface (3), and said image-forming optical component is one of optical components according to claims 1 to 6.

8. The optical system of the surveying instrument according to claim 7, further comprising an illumination light source (44) for tracking, said illumination light source for tracking is provided opposite to a concave portion of said incident surface (R1), an illumination light emitted from said illumination light source for tracking is projected after reflected by said concave portion.

9. The optical system of the surveying instrument according to claim 7, wherein an optical axis (45) to pass through a central part (R4) of said curved concave surface (R2) is branched by a dichroic mirror (46), an illumination light source (36) for tracking is provided on one of branched optical axes, a photodetecting surface (3) is arranged on the other of the optical axes and said dichroic mirror is adapted to separate an illumination light and a distance measuring light.
